# EUROPEAN PATENT SPECIFICATION

(11) **EP 4 526 391 B1**
(45) Date of publication and mention of the grant of the patent: **21.10.2026**
(21) Application number: 23732713.5
(22) Date of filing: 17.05.2023
(51) Int. Cl.: C09K 5/04, C10M 171/00

(54) **REFRIGERANT COMPOSITIONS CONTAINING PROPYLENE AND FLUOROCARBONS AND USES THEREOF**
KÜHLZUSAMMENSETZUNGEN MIT PROPYLEN UND FLUORKOHLENWASSERSTOFFEN SOWIE VERWENDUNGEN DAVON
COMPOSITIONS RÉFRIGÉRANTES CONTENANT DU PROPYLÈNE ET DES FLUOROCARBONES ET LEURS UTILISATIONS

(30) Priority: 18.05.2022 US 202263343164 P
(43) Date of publication of application: 26.03.2025
(73) Proprietor: The Chemours Company FC, LLC, Wilmington, Delaware 19801 (US)
(72) Inventor: SIMONI, Luke David, Wilmington, Delaware 19806 (US); PENG, Sheng, Hockessin, Delaware 19707 (US); HUGHES, Joshua, Wilmington, Delaware 19810 (US); MINOR, Barbara Haviland, The Villages, Florida 32163 (US)
(74) Representative: Abitz & Partner
(86) International application number: PCT/US2023/022514
(87) International publication number: WO 2023/225069

(56) References cited:
- KR-A- 20110 040 130
- US-A1- 2008 230 738
- US-A1- 2010 123 095
- US-A1- 2011 219 791
- US-A1- 2019 062 613
- US-A1- 2021 179 909
- US-A1- 2021 261 842

## Description

### FIELD

The present invention is directed to refrigerant compositions and methods and systems using said compositions.

### BACKGROUND

In the past few years, refrigerant blends have been proposed using new molecules to provide blends with GWP below 150, thus improving on the existing fluoroolefin blends. The new molecules proposed are fluoroethylenes, such as HFO-1123, HFO-1132a, and HFO-1132E. However, there are significant concerns regarding the reactivity and safety of these molecules. HFO-1123 and HFO-1132a are known as reactive monomers that can form homopolymer and co-polymers with other olefins. Additionally, HFO-1123 is handled similarly to tetrafluoroethyene (TFE), which is known for its explosivity in the presence of air and/or under pressure greater than 50 psi (345 kPa). HFO-1132a deflagrates at high pressure in addition to its potential run-away polymerization hazard (the heat of polymerization of HFO-1132a is 2-3 times higher than TFE). Although there are little data regarding HFO-1132E, it may pose a potential deflagration hazard as it is a structural isomer of HFO-1132a, and it is considered to be a more reactive monomer than HFO-1234yf. KR 2011 0040130 describes a refrigerant blend comprising HFC-32, HFO-1234yf and propylene. US 2011/219791 describes refrigerant compositions comprising HFO-1234yf, HFC-32 and a third component selected from propane, propylene and ethylene.

The present inventors have identified refrigerant blends that provide the lower GWP that is needed but are also less likely to pose a safety risk in use.

### SUMMARY

The present inventors have discovered unique compositions that provide GWP of 150 or less, capacity within 10% of either R-404A or R-1234yf, and COP similar or improved relative to R-404A or R-1234yf. And though the components are flammable or mildly compounds, it is possible to produce blends that are only mildly flammable (ASHRAE class 2L flammability), thus reducing the fire hazard as well.

The compositions of the present invention comprise about 0.05 to 22.0 weight percent HFC-32, about 68.0 to 99.9 weight percent HFO-1234yf, and about 0.05 to 10 weight percent propylene.

The present invention includes the following aspects and embodiments:

In one embodiment, the compositions are useful as refrigerants and heat transfer fluids. The compositions disclosed herein comprise: 2,3,3,3-tetrafluoropropene (HFO-1234yf), difluoromethane (HFC-32), and propylene.

According to any of the foregoing embodiments, also disclosed herein are compositions as described above which further comprise propane.

According to any of the foregoing embodiments, also disclosed herein are compositions as described above which further comprise pentafluoroethane (HFC-125).

According to any of the foregoing embodiments, also disclosed herein are compositions as described above which further comprise propane and HFC-125.

According to any of the foregoing embodiments, also disclosed herein are compositions as described above which further comprise carbon dioxide (CO₂).

According to any of the foregoing embodiments, also disclosed herein are compositions comprising about 3.0 to 22.0 weight percent HFC-32, about 68.0 to 95.0 weight percent HFO-1234yf, and about 2.0 to 10.0 weight percent propylene; or about 18.0 to 22.0 weight percent HFC-32, about 75.0 to 79.0 weight percent HFO-1234yf, and about 0.5 to 3.0 weight percent propylene.

According to any of the foregoing embodiments, also disclosed herein are compositions comprising about 3.0 to 22.0 weight percent HFC-32, about 68.0 to 95.0 weight percent HFO-1234yf, about 2.0 to 9.0 weight percent propylene, and about 2.0 to 9.0 weight percent propane; or about 18.0 to 22.0 weight percent HFC-32, about 75.0 to 79.0 weight percent HFO-1234yf, about 0.5 to 2.0 weight percent propylene, and about 0.5 to 2.0 weight percent propane; or about 18.0 to 22.0 weight percent HFC-32, about 75.0 to 79.0 weight percent HFO-1234yf, about 0.5 to 2.0 weight percent propylene, and about 0.5 to 2.0 weight percent propane.

According to any of the foregoing embodiments, also disclosed herein are compositions comprising about 3.0 to 21.0 weight percent HFC-32, about 68.93 to 95.0 weight percent HFO-1234yf, about 2.0 to 9.0 weight percent propylene, and about 2.0 to 4.0 weight percent HFC-125; or about 17.0 to 19.0 weight percent HFC-32, about 77.0 to 79.0 weight percent HFO-1234yf, about 1.0 to 3.0 weight percent propylene, and about 0.5 to 4.0 weight percent HFC-125.

According to any of the foregoing embodiments, also disclosed herein are compositions comprising about 3.0 to 21.0 weight percent HFC-32, about 68.93 to 95.0 weight percent HFO-1234yf, about 2.0 to 9.0 weight percent propylene, about 2.0 to 9.0 weight percent propane, and about 2.0 to 4.0 weight percent HFC-125.

According to any of the foregoing embodiments, also disclosed herein are compositions comprising about 0.5 to 22.0 weight percent HFC-32, about 70.0 to 89.0 weight percent HFO-1234yf, about 0.5 to 2.0 weight percent propylene, about 0.5 to 2.0 weight percent propane, and about 0.5 to 13.0 weight percent CO₂.

According to any of the foregoing embodiments, also disclosed herein are compositions comprising about 3 to 20 weight percent HFC-32, about 69.93 to 95 weight percent HFO-1234yf, about 2.0 to 10.0 weight percent propylene, about 2.0 to 4.0 weight percent HFC-125, and about 3.0 to 6.0 weight percent CO₂; or from about 2.0 to 19.0 weight percent HFC-32, about 71.0 to 89.0 weight percent HFO-1234yf, about 0.5 to 3.0 weight percent propylene, about 0.5 to 4.0 weight percent HFC-125, and about 0.5 to 14.0 weight percent CO₂.

According to any of the foregoing embodiments, also disclosed herein are compositions comprising about 3 to 20 weight percent HFC-32, about 69.93 to 95 weight percent HFO-1234yf, about 2.0 to 10.0 weight percent propylene, about 2.0 to 4.0 weight percent HFC-125, and about 3.0 to 6.0 weight percent CO₂; or about 2.0 to 19.0 weight percent HFC-32, about 71.0 to 89.0 weight percent HFO-1234yf, about 0.5 to 3.0 weight percent propylene, about 0.5 to 4.0 weight percent HFC-125, and about 0.5 to 14.0 weight percent CO₂.

According to any of the foregoing embodiments, also disclosed herein are compositions comprising about 2.0 to 20.0 weight percent HFC-32, about 69.93 to 95.0 weight percent HFO-1234yf, about 2.0 to 10.0 weight percent propylene, about 2.0 to 10.0 weight percent propane, about 2.0 to 4.0 weight percent HFC-125, and about 0.5 to 4.0 weight percent CO₂, or about 0.5 to 19.0 weight percent HFC-32, about 71.0 to 88.0 weight percent HFO-1234yf, about 0.5 to 2.0 weight percent propylene, about 0.5 to 2.0 weight percent propane, about 0.5 to 4.0 weight percent HFC-125, and about 0.5 to 13.0 weight percent CO₂.

According to any of the foregoing embodiments, also disclosed herein are compositions further comprising at least one lubricant.

According to any of the foregoing embodiments, also disclosed herein are compositions wherein the lubricant is selected from the group consisting of polyalkylene glycols, polyol esters, polyvinyl ethers, poly-alpha-olefins, and combinations thereof.

According to any of the foregoing embodiments, the amount of lubricant can range from about 1 wt% to about 20 wt%, about 1 wt% to about 7 wt%, and, in some cases, about 1 wt% to about 3 wt%.

According to any of the foregoing embodiments, also disclosed herein are compositions further comprising at least one stabilizer.

According to any of the foregoing embodiments, also disclosed herein are compositions wherein the stabilizer is selected from the group consisting of nitromethane, ascorbic acid, terephthalic acid, azoles, phenolic compounds, cyclic monoterpenes, terpenes, phosphites, phosphates, phosphonates, thiols, lactones, and combinations thereof.

According to any of the foregoing embodiments, also disclosed herein are compositions wherein the stabilizer is selected from the group consisting of tolutriazole, benzotriazole, tocopherol, hydroquinone, t-butyl hydroquinone, 2,6-di-terbutyl-4-methylphenol, fluorinated epoxides, n-butyl glycidyl ether, hexanediol diglycidyl ether, allyl glycidyl ether, butylphenylglycidyl ether, d-limonene, α-terpinene, β-terpinene, γ-terpinene, α-pinene, β-pinene, butylated hydroxytoluene, and combinations thereof.

According to any of the foregoing embodiments, also disclosed herein are compositions further comprising a tracer.

According to any of the foregoing embodiments, also disclosed herein are compositions wherein the tracer is selected from hydrofluorocarbons, hydrofluoroolefins, hydrochlorocarbons, hydrochloroolefins, hydrochlorofluorocarbons, hydrochlorofluoroolefins, hydrochlorocarbons, hydrochloroolefins, chlorofluorocarbons, chlorofluoroolefins, hydrocarbons, perfluorocarbons, perfluoroolefins, and combinations thereof.

According to any of the foregoing embodiments, also disclosed herein are compositions wherein the tracer is selected from the group consisting of HFC-23, HCFC-31, HFC-41, HFC-161, HFC-152a, HFC-143a, HFC-227ca, HFC-227ea, HFC-236fa, HFC-236cb, HFC-236ea, HFC-245cb, HFC-245fa, HFC-245eb, HFC-254eb, HFC-263fb, HFC-272ca, HFC-281ea, HFC-281fa, HFC-329p, HFC-329mmz, HFC-338mf, HFC-338pcc, CFC-12, CFC-11, CFC-114, CFC-114a, CFC-115, HCFC-22, HCFC-123, HCFC-124, HCFC-124a, HCFC-141b, HCFC-142b, HCFC-151a, HCFC-244bb, HCC-40, HFO-1141, HCFO-1130E, HCFO-1130Z, HCFO-1130a, HCFO-1131, HCFO-1131a, HCFO-1122, HFO-1123, HFO-1234ye, HFO-1243zf, HFO-1225yeZ, HFO-1225yeE, HFO-1225zc, PFC-116, PFC-C216, PFC-218, PFC-C318, PFC-1216, PFC-31-10mc, PFC-31-10my, CFO-1113, HFC-365mfc, HFC-43-10mee, 1,1,1,2,2,3,4,5,5,6,6,7,7,7-tetradecafluoroheptane, hexafluorobutadiene, 3,3,3-trifluoropropyne, and combinations thereof.

According to any of the foregoing embodiments, also disclosed herein is a process for producing cooling comprising evaporating any of the foregoing compositions in the vicinity of a body to be cooled and thereafter condensing said composition.

According to any of the foregoing embodiments, also disclosed herein is a process for producing heating comprising condensing any of the foregoing compositions in the vicinity of a body to be heated and thereafter evaporating said composition.

According to any of the foregoing embodiments, also disclosed herein is a system for cooling or heating comprising an evaporator, compressor, condenser, and expansion device, said system containing any of the foregoing compositions.

According to any of the foregoing embodiments, also disclosed herein is a method for replacing a first refrigerant composition with a second refrigerant composition in a cooling or heating system comprising removing the first refrigerant composition from the cooling or heating system and charging the second refrigerant composition to the cooling or heating system, wherein the first refrigerant is selected from any of R-22, R-134a, R-1234yf, R-1234ze, R-407C, R-407F, R-404A, or R-507, and wherein the second refrigerant composition is any of the foregoing compositions.

### DETAILED DESCRIPTION

### DEFINITIONS

A refrigerant is defined as a heat transfer fluid that undergoes a phase change from liquid to gas and back again during a cycle used to transfer heat.

A heat transfer system is the system (or apparatus) used to produce a heating or cooling effect in a particular space. A heat transfer system may be a mobile system or a stationary system.

Examples of heat transfer systems are any type of refrigeration systems and air conditioning systems including, but are not limited to, stationary heat transfer systems, air conditioners, freezers, refrigerators, heat pumps, water chillers, flooded evaporator chillers, direct expansion chillers, walk-in coolers, mobile refrigerators, mobile heat transfer systems, mobile air conditioning units, dehumidifiers, and combinations thereof.

Refrigeration capacity (also referred to as cooling capacity) is a term which defines the change in enthalpy of a refrigerant in an evaporator per pound of refrigerant circulated, or the heat removed by the refrigerant in the evaporator per unit volume of refrigerant vapor exiting the evaporator (volumetric capacity). The refrigeration capacity is a measure of the ability of a refrigerant or heat transfer composition to produce cooling. Therefore, the higher the capacity, the greater the cooling that is produced. Cooling rate refers to the heat removed by the refrigerant in the evaporator per unit time.

Coefficient of performance (COP) is the amount of heat removed divided by the required energy input to operate the cycle. The higher the COP, the higher is the energy efficiency. COP is directly related to the energy efficiency ratio (EER) that is the efficiency rating for refrigeration or air conditioning equipment at a specific set of internal and external temperatures.

The term "subcooling" refers to the reduction of the temperature of a liquid below that liquid's saturation point for a given pressure. The saturation point is the temperature at which the vapor is completely condensed to a liquid, but subcooling continues to cool the liquid to a lower temperature liquid at the given pressure. By cooling a liquid below the saturation temperature (or bubble point temperature), the net refrigeration capacity can be increased. Subcooling thereby improves refrigeration capacity and energy efficiency of a system. Subcool amount is the amount of cooling below the saturation temperature (in degrees).

Superheat is a term that defines how far above its saturation vapor temperature (the temperature at which, if the composition is cooled, the first drop of liquid is formed, also referred to as the "dew point") a vapor composition is heated.

Temperature glide (sometimes referred to simply as "glide") is the absolute value of the difference between the starting and ending temperatures of a phase-change process by a refrigerant within a component of a refrigerant system, exclusive of any subcooling or superheating. This term may be used to describe condensation or evaporation of a near azeotrope or non-azeotropic composition. When referring to the temperature glide of a refrigeration, air conditioning or heat pump system, it is common to provide the average temperature glide being the average of the temperature glide in the evaporator and the temperature glide in the condenser.

The net refrigeration effect is the quantity of heat that each kilogram of refrigerant absorbs in the evaporator to produce useful cooling.

The mass flow rate is the quantity of refrigerant in kilograms circulating through the refrigeration, heat pump or air conditioning system over a given period of time.

As used herein, the term "lubricant" means any material added to a composition or a compressor (and in contact with any heat transfer composition in use within any heat transfer system) that provides lubrication to the compressor to aid in preventing parts from seizing.

Flammability is a term used to mean the ability of a composition to ignite and/or propagate a flame. For refrigerants and other heat transfer compositions, the lower flammability limit ("LFL") is the minimum concentration of the heat transfer composition in air that is capable of propagating a flame through a homogeneous mixture of the composition and air under test conditions specified in ASTM (American Society of Testing and Materials) E-681. The upper flammability limit ("UFL") is the maximum concentration of the heat transfer composition in air that is capable of propagating a flame through a homogeneous mixture of the composition and air under the same test conditions. Determination of whether a refrigerant compound or mixture is flammable, or non-flammable is also done by testing under the conditions of ASTM E-681.

During a refrigerant leak, lower boiling components of a mixture may leak preferentially. Thus, the composition in the system as well as the vapor leaking can vary over the time period of the leak. Thus, a non-flammable mixture may become flammable under leakage scenarios. And in order to be classified as non-flammable by ASHRAE (American Society of Heating, Refrigeration and Air-conditioning Engineers), a refrigerant or heat transfer composition must be non-flammable as formulated, but also under leakage conditions.

Global warming potential (GWP) is an index for estimating relative global warming contribution due to atmospheric emission of a kilogram of a particular greenhouse gas compared to emission of a kilogram of carbon dioxide. GWP can be calculated for different time horizons showing the effect of atmospheric lifetime for a given gas. The GWP for the 100-year time horizon is commonly the value referenced. For mixtures, a weighted average can be calculated based on the individual GWPs for each component.

Ozone depletion potential (ODP) is a number that refers to the amount of ozone depletion caused by a substance. The ODP is the ratio of the impact on ozone of a chemical compared to the impact of a similar mass of CFC-11 (fluorotrichloromethane). Thus, the ODP of CFC-11 is defined to be 1.0. Other CFCs and HCFCs have ODPs that range from 0.01 to 1.0. HFCs and HFOs have zero ODP because they do not contain chlorine or other ozone depleting halogens.

As used herein, the terms "comprises," "comprising," "includes," "including," "has," "having" or any other variation thereof, are intended to cover a non-exclusive inclusion. For example, a composition, process, method, article, or apparatus that comprises a list of elements is not necessarily limited to only those elements but may include other elements not expressly listed or inherent to such composition, process, method, article, or apparatus.

The transitional phrase "consisting of" excludes any element, step, or ingredient not specified. If in the claim such would close the claim to the inclusion of materials other than those recited except for impurities ordinarily associated therewith. When the phrase "consists of" appears in a clause of the body of a claim, rather than immediately following the preamble, it limits only the element set forth in that clause; other elements are not excluded from the claim as a whole.

The transitional phrase "consisting essentially of" is used to define a composition, method or apparatus that includes materials, steps, features, components, or elements, in addition to those literally disclosed provided that these additional included materials, steps, features, components, or elements do not materially affect the basic and novel characteristic(s) of the claimed invention. The term 'consisting essentially of' occupies a middle ground between "comprising" and 'consisting of'. Typically, components of the refrigerant mixtures and the refrigerant mixtures themselves can contain minor amounts (e.g., less than about 0.5 weight percent total) of impurities and/or byproducts (e.g., from the manufacture of the refrigerant components or reclamation of the refrigerant components from other systems) which do not materially affect the novel and basic characteristics of the refrigerant mixture.

Where applicants have defined an invention or a portion thereof with an open-ended term such as "comprising," it should be readily understood that (unless otherwise stated) the description should be interpreted to also describe such an invention using the terms "consisting essentially of" or "consisting of."

Also, use of "a" or "an" are employed to describe elements and components described herein. This is done merely for convenience and to give a general sense of the scope of the invention. This description should be read to include one or at least one and the singular also includes the plural unless it is obvious that it is meant otherwise.

Unless otherwise defined, all technical and scientific terms used herein have the same meaning as commonly understood by one of ordinary skill in the art to which this invention belongs. Although methods and materials similar or equivalent to those described herein can be used in the practice or testing of embodiments of the disclosed compositions, suitable methods and materials are described below. In addition, the materials, methods, and examples are illustrative only and not intended to be limiting.

### COMPOSITIONS

The present inventors propose a safer alternative to HFO-1123, HFO-1132E and the like, by using a small amount of propylene and optionally propane in a refrigerant blend to improve capacity and keep GWP low. Propylene and propane are less reactive and though flammable, when used in small quantities can product desirable refrigerant blends. Propylene has a molecular weight of about 2/3 of that for HFO-1132E or HFO-1132a and thus less propylene can be used to achieve the same cooling effect. The key attributes of the refrigerant compositions as claimed herein are safety (stability and flammability of class 2 or class 2L), environmentally friendly (low GWP and zero ODP), and good refrigerant performance. In particular, the present compositions provide GWP less than 150, cooling capacity within 10% of R-404A or R-1234yf and COP similar or improved relative to R-404A or R-1234yf.

The inventive refrigerant blends include compositions comprising HFO-1234yf, HFC-32, and propylene; compositions comprising HFO-1234yf, HFC-32, propylene, and propane; compositions comprising HFO-1234yf, HFC-32, propylene, and HFC-125; compositions comprising HFO-1234yf, HFC-32, propylene, propane, and HFC-125; compositions comprising HFO-1234yf, HFC-32, propylene, and CO₂; compositions comprising HFO-1234yf, HFC-32, propylene, HFC-125, and CO₂; and compositions comprising HFO-1234yf, HFC-32, propylene, propane, HFC-125, and CO₂.

In one embodiment the refrigerant blend compositions comprise HFC-32, HFO-1234yf and propylene. In another embodiment the refrigerant blend compositions further comprise propane. In a different embodiment the refrigerant blend compositions further comprise HFC-125. In another embodiment the refrigerant blend compositions further comprise propane and HFC-125. In another embodiment, any of the aforementioned refrigerant blend compositions further comprise carbon dioxide (CO₂).

The refrigerant blend compositions comprise from about 0.05 to 22.0 weight percent HFC-32, about 68.0 to 99.9 weight percent HFO-1234yf, and about 0.05 to 10.0 weight percent propylene. In one embodiment, the refrigerant blend compositions comprise about 3.0 to 22.0 weight percent HFC-32, about 68.0 to 95.0 weight percent HFO-1234yf, and about 2.0 to 10.0 weight percent propylene. In another embodiment, the refrigerant blend compositions comprise 18.0 to 22.0 weight percent HFC-32, about 75.0 to 79.0 weight percent HFO-1234yf, and about 0.5 to 3.0 weight percent propylene.

In one embodiment, the refrigerant blend compositions comprise from about 3.0 to 22.0 weight percent HFC-32, about 68.0 to 95.0 weight percent HFO-1234yf, about 2.0 to 9.0 weight percent propylene, and about 2.0 to 9.0 weight percent propane. In another embodiment, the refrigerant blend compositions comprise from about 18.0 to 22.0 weight percent HFC-32, about 75.0 to 79.0 weight percent HFO-1234yf, about 0.5 to 2.0 weight percent propylene, and about 0.5 to 2.0 weight percent propane. In another embodiment, the refrigerant blend compositions comprise from about 18.0 to 22.0 weight percent HFC-32, about 75.0 to 79.0 weight percent HFO-1234yf, about 0.5 to 2.0 weight percent propylene, and about 0.5 to 2.0 weight percent propane.

In one embodiment, the refrigerant blend compositions comprise from about 3.0 to 21.0 weight percent HFC-32, about 68.93 to 95.0 weight percent HFO-1234yf, about 2.0 to 9.0 weight percent propylene, and about 2.0 to 4.0 weight percent HFC-125. In another embodiment, the refrigerant blend compositions comprise about 17.0 to 19.0 weight percent HFC-32, about 77.0 to 79.0 weight percent HFO-1234yf, about 1.0 to 3.0 weight percent propylene, and about 0.5 to 4.0 weight percent HFC-125.

In one embodiment, the refrigerant blend compositions comprise from about 0.5 to 22.0 weight percent HFC-32, about 70.0 to 89.0 weight percent HFO-1234yf, about 0.5 to 2.0 weight percent propylene, about 0.5 to 2.0 weight percent propane, and about 0.5 to 13.0 weight percent CO₂.

In one embodiment, the refrigerant blend compositions comprise from about 2.0 to 21.0 weight percent HFC-32, about 68.93 to 95.0 weight percent HFO-1234yf, about 2.0 to 9.0 weight percent propylene, about 2.0 to 9.0 weight percent propane, and about 0.5 to 4.0 weight percent HFC-125.

In one embodiment, the refrigerant blend compositions comprise from about 3 to 20 weight percent HFC-32, about 69.93 to 95 weight percent HFO-1234yf, about 2.0 to 10.0 weight percent propylene, about 2.0 to 4.0 weight percent HFC-125, and about 3.0 to 6.0 weight percent CO₂. In another embodiment, the refrigerant blend compositions comprise from about 2.0 to 19.0 weight percent HFC-32, about 71.0 to 89.0 weight percent HFO-1234yf, about 0.5 to 3.0 weight percent propylene, about 0.5 to 4.0 weight percent HFC-125, and about 0.5 to 14.0 weight percent CO₂.

In one embodiment, the refrigerant blend compositions comprise from about 2.0 to 20.0 weight percent HFC-32, about 69.93 to 95.0 weight percent HFO-1234yf, about 2.0 to 10.0 weight percent propylene, about 2.0 to 10.0 weight percent propane, about 2.0 to 4.0 weight percent HFC-125, and about 0.5 to 4.0 weight percent CO₂. In another embodiment, the refrigerant blend compositions comprise about 0.5 to 19.0 weight percent HFC-32, about 71.0 to 88.0 weight percent HFO-1234yf, about 0.5 to 2.0 weight percent propylene, about 0.5 to 2.0 weight percent propane, about 0.5 to 4.0 weight percent HFC-125, and about 0.5 to 13.0 weight percent CO₂.

In some embodiments, the refrigerants containing HFC-32, HFO-1234yf, propylene, and optionally propane, HFC-125 and/or CO₂ have low GWP. In one embodiment, the refrigerants have GWP less than 150, or preferably GWP less than 100. GWP values for the present inventive compositions are taken from the Intergovernmental Panel on Climate Change (IPCC) Fifth Assessment Report, 2013 (AR5), for HFO-1234yf, HFC-32, and HFC-125. The GWP for propane and propylene are taken from the California Air Resources Board (see https://ww2.arb.ca.gov/resources/documents/high-gwp-refrigerants). The GWP values for determination of the blend GWP are provided in Table A.

**Table A**

| Compound | GWP |
|---|---|
| HFO-1234yf | 1 |
| HFC-32 | 677 |
| HFC-125 | 3170 |
| Propane | 4 |
| Propylene | 2 |
| CO₂ | 1 |

In addition to refrigerants the compositions of the present invention may contain other additional compounds. These additional compounds may be selected from lubricants, stabilizers, tracers, UV dyes, among others.

In one embodiment, the compositions as disclosed herein containing refrigerants comprising HFC-32, HFO-1234yf, propylene, and optionally propane, HFC-125 and/or CO₂ may further comprise at least one refrigeration lubricant. In one embodiment, the at least one lubricant is selected from the group consisting of polyalkylene glycol (PAG), polyol ester (POE), and polyvinyl ether (PVE) and combinations thereof. Additionally, other lubricants may be included in the present compositions, such as mineral oils, alkylbenzenes, polyalphaolefins, among others. The amount of lubricant included in the present compositions may vary across a wide range. Once a refrigerant is charged into a system for cooling or heating, there will be varying amounts of lubricant mixed with the refrigerants, depending on the location in the system. The amount of lubricant can range from about 1 wt% to about 20 wt%, about 1 wt% to about 7 wt%, and, in some cases, about 1 wt% to about 3 wt%.

In another embodiment, stabilizer may be added to the refrigerants containing HFC-32, HFO-1234yf, propylene, and optionally propane, HFC-125 and/or CO₂. Stabilizers serve to inhibit breakdown of the refrigerant molecules due to the presence of water or oxygen in the system. Additionally, stabilizers may prevent polymerization of the HFO components of the refrigerant mixtures. Thus, provided herein are compositions comprising refrigerants comprising or consisting essentially of HFC-32, HFO-1234yf, propylene, and optionally propane, HFC-125 and/or CO₂ further comprising at least one stabilizer. In one embodiment, the at least one stabilizer may be selected from nitromethane, ascorbic acid, terephthalic acid, azoles, phenolic compounds, cyclic monoterpenes, terpenes, phosphites, phosphates, phosphonates, thiols, lactones, and combinations thereof. In another embodiment, the stabilizer is selected from the group consisting of tolutriazole, benzotriazole, tocopherol, hydroquinone, t-butyl hydroquinone, 2,6-di-terbutyl-4-methylphenol, fluorinated epoxides, n-butyl glycidyl ether, hexanediol diglycidyl ether, allyl glycidyl ether, butylphenylglycidyl ether, d-limonene, α-terpinene, β-terpinene, γ-terpinene, α-pinene, β-pinene, butylated hydroxytoluene, and combinations thereof.

Alternatively, the stabilizers comprised in the inventive compositions may be selected from the group consisting of hindered phenols, thiophosphates, butylated triphenylphosphorothionates, organo phosphates, or phosphites, aryl alkyl ethers, terpenes, terpenoids, epoxides, fluorinated epoxides, oxetanes, ascorbic acid, thiols, lactones, thioethers, amines, nitromethane, alkylsilanes, benzophenone derivatives, aryl sulfides, divinyl terephthalic acid, diphenyl terephthalic acid, ionic liquids, and mixtures thereof.

Additionally, the present compositions may further comprise at least one tracer compound or mixture of tracer compounds. Tracers may be used to identify the process by which a refrigerant, or refrigerant mixture is produced. The tracer compounds may be specific to the manner of production or may be added as a single tracer or mixture of tracers in particular amounts in order to detect dilution, adulteration, contamination, or other unauthorized practices.

The tracer may be a single compound or two or more tracer compounds from the same class of compounds or from different classes of compounds. In some embodiments, the tracer is present in the compositions at a total concentration of about 1 part per million by weight (ppm) to about 5000 ppm, based on the weight of the total composition. In other embodiments, the tracer is present at a total concentration of about 1 ppm to about 1000 ppm. In other embodiments, the tracer is present at a total concentration of about 2 ppm to about 500 ppm. Alternatively, the tracer is present at a total concentration of about 10 ppm to about 300 ppm.

The tracer compound or compounds may be selected from hydrofluorocarbons, hydrofluoroolefins, hydrochlorocarbons, hydrochloroolefins, hydrochlorofluorocarbons, hydrochlorofluoroolefins, hydrochlorocarbons, hydrochloroolefins, chlorofluorocarbons, chlorofluoroolefins, hydrocarbons, perfluorocarbons, perfluoroolefins, and combinations thereof. In particular, the tracers may include, but are not limited to compounds selected from HFC-23 (trifluoromethane), HCFC-31 (chlorofluoromethane), HFC-41 (fluoromethane), HFC-161 (fluoroethane), HFC-152a (1,1-difluoromethane), HFC-143a (1,1,1-trifluoroethane), HFC-227ca (1,1,1,2,2,3,3-heptafluoropropane), HFC-227ea (1,1,1,2,3,3,3-heptafluoropropane), HFC-236fa (1,1,1,3,3,3-hexafluoropropane), HFC-236cb (1,1,1,2,2,3-hexafluoropropane), HFC-236ea (1,1,1,2,3,3-hexafluoropropane), HFC-245cb (1,1,1,2,2-pentafluoropropane), HFC-245fa (1,1,1,3,3-pentafluoropropane) HFC-245eb (1,1,1,2,3-pentafluoropropane), HFC-254eb (1,1,1,2-tetrafluoropropane), HFC-263fb (1,1,1-trifluoropropane), HFC-272ca (2,2-difluoropropane), HFC-281ea (2-fluoropropane), HFC-281fa (1-fluoropropane), HFC-329p (1,1,1,2,2,3,3,4,4-nonafluorobutane), HFC-329mmz (2-trifluoromethyl-1,1,1,3,3,3-hexafluoropropane), HFC-338mf (1,1,1,2,2,4,4,4-octafluorobutane), HFC-338pcc (1,1,2,2,3,3,4,4-octafluorobutane), CFC-12 (dichlorodifluoromethane), CFC-11 (trichlorofluoromethane), CFC-114 (1,2-dichloro-1,1,2,2-tetrafluoroethane), CFC-114a (2,2-dichloro-1,1,1,2-tetrafluoroethane), CFC-115 (chloropentafluoroethane), HCFC-22 (chlorodifluoromethane), HCFC-123 (2,2-dichloro-1,1,1-trifluoroethane), HCFC-124 (2-chloro-1,1,1,2-tetrafluoroethane), HCFC-124a (1-chloro-1, 1,2,2-tetrafluoroethane), HCFC-141b (1,1-dichloro-1-fluoroethane), HCFC-142b (1-chloro-1,1-difluoroethane), HCFC-151a (1-chloro-1-fluoroethane), HCFC-244bb (2-chloro-1,1,1,2-tetrafluoropropane), HCC-40 (chloromethane), HFO-1141 (fluoroethylene), HCFO-1130 (1,2-dichloroethylene, E- and/or Z-isomer), HCFO-1130a (1,1-dichloroethylene), HCFO-1131 (1-chloro-2-fluoroethylene, E- and/or Z-isomer), HCFO-1131a (1-chloro-1-fluoroethylene), HCFO-1122 (2-chloro-1,1-difluoroethylene), HFO-1123 (trifluoroethylene), HFO-1234ye (1,2,3,3-tetrafluoropropene), HFO-1243zf (3,3,3-trifluoropropene), HFO-1225yeZ (1,2,3,3,3-pentafluoropropene), HFO-1225yeE (1,2,3,3,3-pentafluoropropene), HFO-1225zc (1,1,3,3,3-pentafluoropropene), PFC-116 (hexafluoroethane), PFC-C216 (hexafluorocyclopropane), PFC-218 (octafluoropropane), PFC-C318 (octafluorocyclebutane), PFC-1216 (hexafluoropropene), PFC-31-10mc (decafluorobutane), PFC-31-10my (2-trifluoromethyl-1, 1,1,2,3,3,3-heptafluoropropane), 2-chloro-1,1,2-trifluoroethylene (CFO-1113), 1,1,1,3,3-pentafluorobutane (HFC-365mfc), 1,1,1,2,3,4,4,5,5,5-decafluoropentane (HFC-43-10mee), 1,1,1,2,2,3,4,5,5,6,6,7,7,7-tetradecafluoroheptane, hexafluorobutadiene, 3,3,3-trifluoropropyne, deuterated hydrocarbons, deuterated hydrofluorocarbons, perfluorocarbons, fluoroethers, and mixtures thereof. In some embodiments, the tracer is a blend containing two or more hydrofluorocarbons, or one hydrofluorocarbon in combination with one or more perfluorocarbons. In other embodiments, the tracer is a blend of at least one CFC and at least one HCFC, HFC, or PFC.

In another embodiment, provided herein is a storage container for refrigerant containing the compositions comprising HFC-32, HFO-1234yf, propylene, and optionally propane, HFC-125 and/or CO₂, as described herein, wherein the refrigerant comprises gaseous and liquid phases.

The storage container will be properly prepared for loading with the present compositions by evacuation and heating such that there are limits on the amount of water and/or oxygen to prevent reaction or degradation of the refrigerant portion of the compositions within the container. In one embodiment, the water is limited to 0.1 to 200 ppm by weight, or 0.1 to 100 ppm by weight, or 0.1 to 50 ppm by weight or 0.1 to 10 ppm by weight. In another embodiment, the oxygen is limited to 0.35 volume percent or less. In another embodiment, the oxygen is present from about 0.01 to 0.35 volume percent. In yet another embodiment, the oxygen is limited to 0.01 to 0.25 volume percent. And in yet another embodiment, the oxygen is limited to 0.01 to 0.15 volume percent.

The container for storing the foregoing compositions can be constructed of any suitable material and design that is capable of sealing the compositions therein while maintaining gaseous and liquids phases. Examples of suitable containers comprise pressure resistant containers such as a tank, a filling cylinder, and a secondary filing cylinder. The container can be constructed from any suitable material such as carbon steel, manganese steel, chromium-molybdenum steel, among other low-alloy steels, any stainless steel and in some cases an aluminum alloy.

The compositions of the present invention may be prepared by any convenient method to combine the desired amount of the individual components. A preferred method is to weigh the desired component amounts and thereafter combine the components in an appropriate vessel. Agitation may be used, if desired. In another embodiment, any of the foregoing refrigerant compositions can be prepared by blending HFC-32, HFO-1234yf, propylene, and optionally propane, HFC-125 and/or CO₂.

Additionally, the compositions may be prepared from recycled or reclaimed refrigerant. One or more of the components may be recycled or reclaimed by means of removing contaminants, such as air, water, or residue, which may include lubricant or particulate residue from system components. The means of removing the contaminants may vary widely, but can include distillation, decantation, filtration, and/or drying by use of molecular sieves or other absorbents. Then the recycled or reclaimed component(s) may be combined with the other component(s) as described above.

### Methods, Processes and Apparatus

Vapor-compression refrigeration, air-conditioning, or heat pump systems include an evaporator, a compressor, a condenser, and an expansion device. A vapor-compression cycle re-uses refrigerant in multiple steps producing a cooling effect in one step and a heating effect in a different step. The cycle can be described simply as follows. Liquid refrigerant enters an evaporator through an expansion device, and the liquid refrigerant boils in the evaporator, by withdrawing heat from the environment, at a low temperature to form a gas and produce cooling. The low-pressure gas enters a compressor where the gas is compressed to raise its pressure and temperature. The higher-pressure (compressed) gaseous refrigerant then enters the condenser in which the refrigerant condenses and discharges its heat to the environment. The refrigerant returns to the expansion device through which the liquid expands from the higher-pressure level in the condenser to the low-pressure level in the evaporator, thus repeating the cycle.

In one embodiment, provided herein is process for producing cooling comprising evaporating any of the compositions as described herein in the vicinity of a body to be cooled and thereafter condensing said composition.

In another embodiment, provided herein is a process for producing heating comprising condensing any of the compositions as described herein in the vicinity of a body to be heated and thereafter evaporating said composition.

A body to be cooled or heated may be defined as any space, location object or body for which it is desirable to provide cooling or heating. Examples include, but are not limited to, spaces (open or enclosed) requiring air conditioning, cooling, or heating, such as a room, an apartment, or building, such as an apartment building, university dormitory, townhouse, or other attached house or single-family home, hospitals, office buildings, supermarkets, schools, college or university classrooms or administration buildings and automobile or truck passenger compartments. Additionally, a body to be cooled may include electronic devices, such as computer equipment, central processing units (CPU), data-centers, server banks, and personal computing devices, among others.

In some cases, such as for chillers, the body to be cooled is a secondary fluid that is then transferred to a space, location object or body for which it is desirable to provide cooling. The secondary fluid can be water, an aqueous brine solution (such as CaCl₂, MgCl₂, for cooling equipment in a manufacturing process, for instance), or an aqueous glycol or alcohol solution, as non-limiting examples. The same may be true for water heating heat pumps, wherein the body to be heated is water to be transferred to a home for heating or for heating water for use in appliances, for instance.

In the cooling process, by "in the vicinity of" is meant that the evaporator of the system containing the refrigerant blend of the present invention is located either within or adjacent to the body to be cooled, such that air moving over the evaporator would move into or around the body to be cooled. In the process for producing heating, "in the vicinity of" means that the condenser of the system containing the refrigerant is located either within or adjacent to the body to be heated, such that the air moving over the condenser would move into or around the body to be heated. In some embodiments, for heat transfer, "in the vicinity of" may mean that the body to be cooled is immersed directly in the refrigerant or tubes containing the refrigerant run into or around internally, and out of electronic equipment, for instance.

In another embodiment, a system for cooling is provided, said system comprising an evaporator, compressor, condenser, and expansion device, said system containing any of the compositions disclosed herein.

In one embodiment, the system for cooling may be selected from the group consisting of refrigeration systems and air conditioning systems including, but are not limited to, stationary heat transfer systems, air conditioners, freezers, refrigerators, supermarket refrigeration cases, supermarket freezer cases, heat pumps, water chillers, flooded evaporator chillers, direct expansion chillers, walk-in coolers, mobile refrigerators, transport refrigeration devices, mobile heat transfer systems, mobile air conditioning units, dehumidifiers, and combinations thereof.

In one embodiment, the system for cooling may be a chiller. In some embodiments, the chiller is a direct expansion evaporator chiller or flooded evaporator chiller. In some embodiments, the heat exchanger for a chiller will operate in counter-current mode, increasing efficiency of the system. In some embodiments, the chiller comprises a compressor is selected from a centrifugal, screw, scroll or reciprocating compressor.

A chiller is a heat transfer device often used for cooling (or chilling) a liquid that is then used to cool or heat a secondary location. It is often used for air conditioning of a building such as an office building, apartment building or hospital for instance. A chiller may be used for cooling equipment, such as distillation columns, in a manufacturing process. Additionally, a chiller may be used for refrigeration of supermarket display cases.

In another embodiment, a system for heating is provided, said system comprising an evaporator, compressor, condenser, and expansion device, said system containing any of the compositions disclosed herein. In one embodiment, the system for heating may be a heat pump. A heat pump may be a residential heat pump for heating air. In another embodiment, a heat pump may be a high temperature heat pump, by which is meant a heat pump with condenser temperatures above 55 °C, or with condenser temperatures above 80 °C, or even with condenser temperatures above 100 °C.

Heat pumps may include flooded evaporators or direct expansion evaporators similarly to chillers. Heat pumps may utilize positive displacement compressors or dynamic compressors (e.g. centrifugal compressors). Positive displacement compressors include reciprocating, screw, or scroll compressors. Of note are heat pumps that use screw compressors. Also, of note are heat pumps that use centrifugal compressors.

Residential heat pumps are used to produce heated air to warm a residence or home (including single family or multi-unit attached homes) and produce maximum condenser operating temperatures from about 30°C to about 50°C.

Of note are high temperature heat pumps that may be used to heat air, water, another heat transfer medium or some portion of an industrial process, such as a piece of equipment, storage area or process stream. In one embodiment, these high temperature heat pumps use condenser operating temperatures greater than about 55 °C. In one embodiment, the condenser operating temperature for a high temperature heat pump is from about 55 °C to about 150 °C. In one embodiment, the system for heating may be a water heating heat pump.

In one embodiment, a method for replacing a first refrigerant composition with a second refrigerant composition in a cooling or heating system is provided. The method comprises removing the first refrigerant composition from the cooling or heating system and charging second refrigerant composition to the cooling or heating system, wherein the first refrigerant is selected from any of R-22, R-134a, R-1234yf, R-407C, R-407F, R-404A, or R-507, and wherein the second refrigerant composition is the composition of any of claims 1 to 11.

The invention will be described in greater detail below by way of specific examples. The following examples are offered for illustrative purposes and are not intended to limit the invention in any manner. Those of skill in the art will readily recognize a variety of non-critical parameters which can be changed or modified to yield essentially the same results.

### EXAMPLES

Refrigerant performance has been determined for compositions of the present invention at typical conditions for medium temperature refrigeration and for mobile air conditioning. For medium temperature refrigeration, the results are comparative to R-404A. For mobile air conditioning, the results are comparative to R-1234yf. In the result tables for all the examples, Average temperature glide (Average Temp Glide: the average of the temperature glide in the evaporator and the temperature glide in the condenser), cooling capacity relative to R-404A or R-1234yf (CAP %), COP relative to R-404A or R-1234yf (COP %), are calculated from physical property measurements for the compositions of the present invention at the conditions specified.

For medium temperature refrigeration:

| | |
|---|---|
| Evaporator temperature | -7°C |
| Condenser temperature | 40°C |
| Return temperature | 18°C |
| Amount of subcooling | 0 K |
| Compressor efficiency | 70% |

For mobile air conditioning:

| | |
|---|---|
| Evaporator temperature | 0°C |
| Condenser temperature | 40°C |
| Superheat | 15 K |
| Amount of subcooling | 0 K |
| Compressor efficiency | 70% |

### EXAMPLE 1

Refrigerant performance in medium temperature refrigeration for 32/1234yf/propylene. Results shown in Table 1.

**Table 1**

| **1234yf/32/propylene (wt%)** | **GWP (AR5)** | **Avg. Glide, K** | **Relative Capacity R-404A, %** | **Relative COP R-404A, %** |
|---|---|---|---|---|
| 75/22/3 | 150 | 5.87 | -4.80 | 3.18 |
| 76/21/3 | 143 | 5.88 | -6.04 | 3.27 |
| 76/22/2 | 150 | 5.72 | -6.12 | 3.43 |
| 77/20/3 | 136 | 5.87 | -7.30 | 3.37 |
| 77/21/2 | 143 | 5.72 | -7.36 | 3.53 |
| 77/22/1 | 150 | 5.54 | -7.48 | 3.71 |
| 78/19/3 | 129 | 5.84 | -8.58 | 3.47 |
| 78/20/2 | 136 | 5.70 | -8.62 | 3.62 |
| 78/21/1 | 143 | 5.53 | -8.72 | 3.80 |
| 77.6/21.9/0.5 | 149 | 5.44 | -8.31 | 3.87 |
| 79/18/3 | 123 | 5.79 | -9.88 | 3.56 |
| 79/19/2 | 129 | 5.67 | -9.90 | 3.72 |
| 79/20/1 | 136 | 5.51 | -9.98 | 3.90 |
| 78.6/20.9/0.5 | 142 | 5.43 | -9.55 | 3.96 |

The results show that the compositions of the present invention have GWP of 150 or less, capacity within 10% of that for R-404A, and COP very similar to R-404A.

### EXAMPLE 2

Refrigerant performance in mobile air-conditioning for 32/1234yf/propylene. The results are shown in Table 2.

**Table 2**

| **1234yf/ 32/ propylene (wt%)** | **GWP (AR5)** | **Avg. Glide, K** | **Relative Capacity 1234yf, %** | **Relative COP 1234yf, %** |
|---|---|---|---|---|
| 96.5/0.5/3.0 | 4 | 1.47 | 8.94 | -0.80 |
| 97.0/1/2 | 8 | 1.36 | 8.15 | -0.75 |
| 97/2/1 | 15 | 1.47 | 8.79 | -0.76 |
| 97.5/0.5/2.0 | 4 | 1.10 | 6.56 | -0.62 |
| 98/1/1 | 8 | 0.97 | 5.69 | -0.55 |
| 97.5/2/0.5 | 14 | 1.26 | 7.51 | -0.66 |
| 98.5/0.5/1.0 | 4 | 0.70 | 4.11 | -0.41 |
| 98.5/1/0.5 | 8 | 0.75 | 4.42 | -0.44 |

The results show that the compositions of the present invention have GWP of 150 or less, capacity within 10% of that for R-1234yf, and COP very similar to R-1234yf.

### EXAMPLE 3

Refrigerant performance in medium temperature refrigeration for 32/1234yf/propylene/propane. The results are shown in Table 3.

**Table 3**

| **1234yf / 32 / propylene / propane (wt%)** | **GWP (AR5)** | **Avg. Glide, K** | **Relative Capacity R-404A, %** | **Relative COP R-404A, %** |
|---|---|---|---|---|
| 75/22/1/2 | 150 | 6.02 | -4.67 | 2.96 |
| 75/22/2/1 | 150 | 5.94 | -4.74 | 3.08 |
| 76/21/1/2 | 143 | 6.02 | -5.92 | 3.06 |
| 76/21/2/1 | 143 | 5.94 | -5.99 | 3.17 |
| 75.6/21.9/0.5/2.0 | 149 | 5.95 | -5.45 | 3.10 |
| 76/22/1/1 | 150 | 5.79 | -6.04 | 3.32 |
| 75.6/21.9/2/0.5 | 149 | 5.83 | -5.57 | 3.26 |
| 77/20/1/2 | 136 | 6.00 | -7.19 | 3.16 |
| 77/20/2/1 | 136 | 5.93 | -7.25 | 3.27 |
| 76.6/20.9/0.5/2.0 | 142 | 5.95 | -6.70 | 3.20 |
| 77/21/1/1 | 143 | 5.79 | -7.29 | 3.42 |
| 76.6/20.9/2/0.5 | 142 | 5.83 | -6.81 | 3.36 |
| 76.6/21.9/0.5/1.0 | 149 | 5.71 | -6.85 | 3.47 |
| 76.6/21.9/1.0/0.5 | 149 | 5.67 | -6.90 | 3.53 |
| 78/19/1/2 | 130 | 5.97 | -8.48 | 3.26 |
| 78/19/2/1 | 129 | 5.90 | -8.54 | 3.37 |
| 77.6/20/0.5/2.0 | 136 | 5.93 | -7.97 | 3.29 |
| 78/20/1/1 | 136 | 5.77 | -8.56 | 3.52 |
| 77.6/20/2/0.5 | 136 | 5.82 | -8.07 | 3.46 |
| 77.6/20.9/0.5/1 | 142 | 5.70 | -8.10 | 3.56 |
| 77.6/20.9/1/0.5 | 142 | 5.66 | -8.14 | 3.62 |
| 79/18/1/2 | 123 | 5.92 | -9.79 | 3.36 |
| 79/18/2/1 | 123 | 5.85 | -9.85 | 3.47 |
| 78.6/18.9/0.5/2.0 | 129 | 5.89 | -9.25 | 3.39 |
| 79/19/1/1 | 129 | 5.74 | -9.84 | 3.61 |
| 78.6/18.9/2.0/0.5 | 129 | 5.78 | -9.35 | 3.55 |
| 78.6/19.9/0.5/1.0 | 136 | 5.68 | -9.36 | 3.66 |
| 78.6/19.9/1.0/0.5 | 136 | 5.64 | -9.39 | 3.71 |

The results show that the compositions of the present invention have GWP of 150 or less, capacity within 10% of that for R-404A, and COP about 3% higher than R-404A.

### EXAMPLE 4

Refrigerant performance in mobile air-conditioning for 32/1234yf/propylene/propane. The results are shown in Table 4.

**Table 4**

| **1234yf/ 32/ propylene/ propane (wt%)** | **GWP (AR5)** | **Avg. Glide, K** | **Relative Capacity 1234yf, %** | **Relative COP 1234yf, %** |
|---|---|---|---|---|
| 96.5/0.5/1.0/2.0 | 4 | 1.46 | 8.62 | -0.89 |
| 96.5/0.5/2.0/1.0 | 4 | 1.46 | 8.75 | -0.84 |
| 96.5/1.0/0.5/2.0 | 8 | 1.54 | 9.05 | -0.95 |
| 97/1/1/1 | 8 | 1.36 | 8.01 | -0.80 |
| 96.5/1.0/2.0/0.5 | 8 | 1.53 | 9.22 | -0.85 |
| 96.5/2.0/0.5/1.0 | 14 | 1.67 | 9.88 | -0.92 |
| 96.5/2.0/1.0/0.5 | 14 | 1.66 | 9.92 | -0.89 |
| 97.5/0.5/1.0/1.0 | 4 | 1.10 | 6.41 | -0.67 |
| 97.5/1.0/0.5/1.0 | 8 | 1.17 | 6.78 | -0.71 |
| 97.5/1.0/1.0/0.5 | 8 | 1.16 | 6.83 | -0.68 |

The results show that the compositions of the present invention have GWP of 150 or less, capacity within 10% of that for R-1234yf, and COP very similar to R-1234yf.

### EXAMPLE 5

Refrigerant performance in medium temperature refrigeration for 1234yf/32/propylene/125. The results are shown in Table 5.

**Table 5**

| **1234yf/ 32/ propylene /125 (wt%)** | **GWP (AR5)** | **Avg. Glide, K** | **Relative Capacity R-404A, %** | **Relative COP R-404A, %** |
|---|---|---|---|---|
| 77.6/18.9/3.0/0.5 | 145 | 5.82 | -8.53 | 3.45 |
| 78.6/17.9/3.0/0.5 | 138 | 5.77 | -9.83 | 3.54 |
| 78.6/18.9/2.0/0.5 | 145 | 5.65 | -9.85 | 3.70 |

The results show that the compositions of the present invention have GWP of 150 or less, capacity within 10% of that for R-404A, and COP very similar to R-404A.

### EXAMPLE 6

Refrigerant performance in mobile air-conditioning for 32/1234yf/propylene/125. The results are shown in Table 6.

**Table 6**

| **1234yf/ 32/ propylene/ 125 (wt%)** | **GWP (AR5)** | **Avg. Glide, K** | **Relative Capacity 1234yf, %** | **Relative COP 1234yf, %** |
|---|---|---|---|---|
| 93.5/0.5/2.0/4.0 | 131 | 1.38 | 9.07 | -0.88 |
| 94/1/1/4 | 135 | 1.24 | 8.17 | -0.78 |
| 93.5/2.0/0.5/4.0 | 141 | 1.52 | 9.96 | -0.87 |
| 94.5/0.5/1.0/4.0 | 131 | 0.99 | 6.57 | -0.66 |
| 94.5/0.5/2.0/3.0 | 99 | 1.32 | 8.44 | -0.81 |
| 94.5/1.0/0.5/4.0 | 134 | 1.03 | 6.86 | -0.67 |
| 95/1/1/3 | 103 | 1.17 | 7.55 | -0.73 |
| 95/1/2/2 | 71 | 1.50 | 9.41 | -0.87 |
| 94.5/2.0/0.5/3.0 | 109 | 1.46 | 9.34 | -0.81 |
| 95.5/0.05/1.0/3.0 | 99 | 0.92 | 5.95 | -0.60 |
| 95.5/0.5/2.0/2.0 | 67 | 1.25 | 7.81 | -0.75 |
| 95.5/0.5/3.0/1.0 | 36 | 1.54 | 9.57 | -0.87 |
| 95.5/1.0/0.5/3.0 | 102 | 0.96 | 6.25 | -0.61 |
| 96/1/1/2 | 71 | 1.11 | 6.93 | -0.67 |
| 96/1/2/1 | 39 | 1.43 | 8.78 | -0.81 |
| 95.5/2.0/0.5/2.0 | 78 | 1.39 | 8.73 | -0.76 |
| 96/2/1/1 | 46 | 1.54 | 9.41 | -0.81 |
| 96.5/0.5/1.0/2.0 | 67 | 0.85 | 5.34 | -0.54 |
| 96.5/0.5/2.0/1.0 | 36 | 1.18 | 7.19 | -0.69 |
| 96.5/1.0/0.5/2.0 | 71 | 0.89 | 5.64 | -0.55 |
| 97/1/1/1 | 39 | 1.04 | 6.31 | -0.61 |
| 96.5/1.0/2.0/0.5 | 24 | 1.39 | 8.42 | -0.77 |
| 96.5/2.0/0.5/1.0 | 46 | 1.33 | 8.12 | -0.71 |
| 96.5/2.0/1.0/0.5 | 30 | 1.50 | 9.06 | -0.78 |
| 97.5/0.5/1.0/1.0 | 36 | 0.78 | 4.72 | -0.48 |
| 97.5/1.0/0.5/1.0 | 39 | 0.82 | 5.03 | -0.49 |
| 97.5/1.0/1.0/0.5 | 24 | 1.00 | 5.97 | -0.58 |

The results show that the compositions of the present invention have GWP of 150 or less, capacity within 10% of that for R-1234yf, and COP very similar to R-1234yf.

### EXAMPLE 7

Refrigerant performance in medium temperature refrigeration for 1234yf/32/propylene/propane/125. The results are shown in Table 7.

**Table 7**

| **1234yf/ 32/ propylene /propane/125 (wt%)** | **GWP (AR5)** | **Avg. Glide, K** | **Relative Capacity R-404A, %** | **Relative COP R-404A, %** |
|---|---|---|---|---|
| 77.6/18.9/1.0/2.0/0.5 | 145 | 5.95 | -8.43 | 3.24 |
| 77.6/18.9/2.0/1.0/0.5 | 145 | 5.88 | -8.49 | 3.35 |
| 78.6/17.9/1.0/2.0/0.5 | 138 | 5.90 | -9.74 | 3.34 |
| 78.6/17.9/2.0/1.0/0.5 | 138 | 5.83 | -9.80 | 3.45 |
| 78.6/18.9/1.0/1.0/0.5 | 145 | 5.72 | -9.79 | 3.59 |

The results show that the compositions of the present invention have GWP of 150 or less, capacity within 10% of that for R-404A, and COP very similar to R-404A.

### EXAMPLE 8

Refrigerant performance in mobile air-conditioning for 32/1234yf/propylene/propane/125. The results are shown in Table 8.

**Table 8**

| **1234yf/ 32/ propylene/ propane/125 (wt%)** | **GWP (AR5)** | **Avg. Glide, K** | **Relative Capacity 1234yf, %** | **Relative COP 1234yf, %** |
|---|---|---|---|---|
| 93.5/0.5/1.0/1.0/4.0 | 131 | 1.38 | 8.93 | -0.93 |
| 93.5/1.0/0.5/1.0/4.0 | 134 | 1.44 | 9.28 | -0.95 |
| 93.5/1.0/1.0/0.5/4.0 | 134 | 1.44 | 9.33 | -0.92 |
| 94/1/1/1/3 | 103 | 1.57 | 9.91 | -0.98 |
| 94.5/0.5/1.0/1.0/3.0 | 99 | 1.31 | 8.30 | -0.86 |
| 94.5/0.5/1.0/2.0/2.0 | 68 | 1.60 | 9.91 | -1.03 |
| 94.5/1.0/0.5/1.0/3.0 | 102 | 1.38 | 8.65 | -0.89 |
| 94.5/1.0/1.0/0.5/3.0 | 102 | 1.37 | 8.70 | -0.86 |
| 95/1/1/1/2 | 71 | 1.50 | 9.27 | -0.92 |
| 95.5/0.5/1.0/1.0/2.0 | 67 | 1.24 | 7.66 | -0.80 |
| 95.5/0.5/1.0/2.0/1.0 | 36 | 1.53 | 9.26 | -0.96 |
| 95.5/0.5/2.0/1.0/1.0 | 36 | 1.53 | 9.39 | -0.90 |
| 95.5/1.0/0.5/1.0/2.0 | 71 | 1.31 | 8.03 | -0.83 |
| 95.5/1.0/0.5/2.0/1.0 | 39 | 1.62 | 9.69 | -1.01 |
| 95.5/1.0/1.0/0.5/2.0 | 71 | 1.30 | 8.08 | -0.80 |
| 96/1/1/1/1 | 39 | 1.43 | 8.64 | -0.86 |
| 95.5/1.0/2.0/0.5/1.0 | 39 | 1.60 | 9.86 | -0.92 |
| 96.5/0.5/1.0/1.0/1.0 | 36 | 1.17 | 7.04 | -0.74 |
| 96.5/1.0/0.5/1.0/1.0 | 39 | 1.24 | 7.40 | -0.77 |
| 96.5/1.0/1.0/0.5/1.0 | 39 | 1.23 | 7.45 | -0.74 |
| 96.5/1.0/1.0/1.0/0.5 | 24 | 1.39 | 8.28 | -0.83 |

The results show that the compositions of the present invention have GWP of 150 or less, capacity within 10% of that for R-1234yf, and COP very similar to R-1234yf.

### EXAMPLE 9

Refrigerant performance in medium temperature refrigeration for 1234yf/32/propylene/125/CO₂. The results are shown in Table 9.

**Table 9**

| **1234yf/ 32/ propylene /125/CO₂ (wt%)** | **GWP (AR5)** | **Avg. Glide, K** | **Relative Capacity R-404A, %** | **Relative COP R-404A, %** |
|---|---|---|---|---|
| 71.6/18.9/3.0/0.5/6.0 | 145 | 9.10 | 9.45 | 0.38 |
| 73/16/3/1/7 | 141 | 9.84 | 9.38 | 0.09 |
| 75/11/3/2/9 | 139 | 11.22 | 9.99 | -0.50 |
| 74.6/16.9/2.0/0.5/6.0 | 131 | 9.16 | 5.82 | 0.74 |
| 76/13/2/1/8 | 121 | 10.51 | 7.64 | 0.06 |
| 75.6/15.9/3.0/0.5/5.0 | 124 | 8.70 | 2.67 | 1.10 |
| 77/10/2/2/9 | 132 | 11.19 | 7.51 | -0.26 |
| 78/10/2/2/8 | 132 | 10.51 | 4.16 | 0.16 |
| 77.6/11.9/2.0/0.5/8.0 | 98 | 10.52 | 5.90 | 0.20 |
| 77.6/14.9/0.5/1.0/6.0 | 133 | 9.04 | 1.61 | 1.15 |
| 78/17/3/1/1 | 148 | 6.32 | -7.87 | 3.03 |
| 79/7/1/2/11 | 112 | 12.51 | 9.09 | -0.69 |
| 79/16/2/1/2 | 141 | 6.74 | -7.48 | 2.78 |
| 80/3/2/4/11 | 148 | 12.35 | 5.61 | -0.89 |
| 79.6/13.9/2.0/0.5/4.0 | 111 | 7.93 | -4.30 | 1.92 |
| 80.5/0.5/3.0/3.0/12.9 | 99 | 13.71 | 9.43 | -1.47 |
| 81/3/2/4/10 | 148 | 11.52 | 2.05 | -0.55 |
| 80.6/15.9/0.5/1.0/2.0 | 140 | 6.44 | -9.65 | 3.16 |
| 82/2/1/3/12 | 110 | 13.00 | 6.01 | -0.95 |
| 81.6/10.9/2.0/0.5/5.0 | 91 | 8.41 | -5.20 | 1.60 |
| 82.6/0.5/2.0/4.0/10.9 | 131 | 11.95 | 1.59 | -0.84 |
| 83/4/1/3/9 | 123 | 10.67 | -1.73 | 0.03 |
| 82.6/5.0/3.0/0.5/8.9 | 50 | 10.93 | 0.79 | -0.04 |
| 83/11/1/1/4 | 107 | 7.52 | -9.37 | 2.24 |
| 84/1/1/1/13 | 39 | 13.69 | 7.11 | -1.04 |
| 83.6/7.9/3.0/0.5/5.0 | 71 | 8.17 | -8.22 | 1.55 |
| 84.6/0.5/3.0/3.0/8.9 | 99 | 10.18 | -4.87 | -0.22 |
| 85.6/2.0/1.0/0.5/10.9 | 30 | 12.00 | 0.92 | -0.40 |
| 86.6/2.0/0.5/3.0/7.9 | 109 | 9.19 | -9.22 | 0.47 |
| 87.6/0.5/1.0/2.0/8.9 | 67 | 9.83 | -7.86 | 0.09 |
| 88.6/2.0/1.0/0.5/7.9 | 30 | 9.18 | -9.72 | 0.59 |

The results show that the compositions of the present invention have GWP of 150 or less, capacity within 10% of that for R-404A, and COP very similar to R-404A.

### EXAMPLE 10

Refrigerant performance in mobile air-conditioning for 32/1234yf/propylene/ 125/CO₂. The results are in Table 10.

**Table 10**

| **1234yf/ 32/ propylene /125/CO₂ (wt%)** | **GWP (AR5)** | **Avg. Glide, K** | **Relative Capacity 1234yf, %** | **Relative COP 1234yf, %** |
|---|---|---|---|---|
| 95.5/1.0/1.0/2.0/0.5 | 71 | 1.65 | 9.87 | -1.25 |
| 96.5/1.0/1.0/1.0/0.5 | 39 | 1.58 | 9.24 | -1.19 |

The results show that the compositions of the present invention have GWP of 150 or less, capacity within 10% of that for R-1234yf, and COP very similar to R-1234yf.

### EXAMPLE 11

Refrigerant performance in medium temperature refrigeration for 1234yf/32/propylene/propane/125/CO₂. The results are in Table 11.

**Table 11**

| **1234yf/32/propylene/propane /125/CO₂ (wt%)** | **GWP (AR5)** | **Avg. Glide, K** | **Relative Capacity R-404A, %** | **Relative COP R-404A, %** |
|---|---|---|---|---|
| 71.6/18.9/1.0/2.0/0.5/6.0 | 145 | 9.26 | 9.64 | 0.15 |
| 73.6/16.9/1.0/0.5/1.0/7.0 | 147 | 9.71 | 8.63 | 0.27 |
| 75/14/2/1/2/7 | 127 | 10.01 | 6.96 | 0.13 |
| 74.6/16.9/1.0/0.5/1.0/6.0 | 147 | 9.14 | 5.47 | 0.74 |
| 76/12/1/1/1/9 | 114 | 11.25 | 9.74 | -0.42 |
| 75.6/14.9/1.0/0.5/1.0/7.0 | 133 | 9.82 | 6.16 | 0.42 |
| 78/5/1/2/3/11 | 130 | 12.66 | 9.28 | -1.26 |
| 77.6/8.9/0.5/2.0/1.0/10.0 | 93 | 12.02 | 9.57 | -0.81 |
| 78.6/9.9/2.0/0.5/2.0/7.0 | 131 | 9.86 | 1.28 | 0.46 |
| 79/12/1/2/1/5 | 114 | 8.75 | -2.07 | 1.10 |
| 81/2/2/1/3/11 | 110 | 12.33 | 4.84 | -1.04 |
| 80.6/4.0/0.5/2.0/1.0/11.9 | 59 | 13.30 | 9.54 | -1.27 |
| 81.6/1.0/1.0/0.5/4.0/11.9 | 134 | 12.92 | 5.42 | -1.15 |
| 82/2/1/1/4/10 | 141 | 11.43 | 0.59 | -0.66 |
| 83/2/2/1/4/8 | 141 | 9.73 | -5.33 | -0.05 |
| 84/5/1/1/3/6 | 130 | 8.42 | -9.33 | 0.99 |
| 83.6/6.9/1.0/0.5/1.0/7.0 | 80 | 9.45 | -4.65 | 0.82 |
| 84.6/5.0/2.0/0.5/1.0/6.9 | 66 | 9.25 | -6.37 | 0.71 |
| 84.6/6.0/1.0/2.0/0.5/6.0 | 57 | 8.72 | -7.82 | 0.94 |
| 85.6/0.5/2.0/1.0/3.0/7.9 | 99 | 9.27 | -8.39 | 0.04 |
| 86/1/1/2/2/8 | 71 | 9.43 | -7.87 | 0.00 |
| 85.6/1.0/2.0/0.5/1.0/9.9 | 39 | 11.11 | -2.09 | -0.39 |
| 86/1/2/1/2/8 | 71 | 9.40 | -7.89 | 0.10 |
| 85.6/2.0/0.5/1.0/1.0/9.9 | 46 | 11.23 | -1.71 | -0.33 |
| 86/3/1/1/1/8 | 53 | 9.72 | -6.41 | 0.31 |
| 85.6/6.0/1.0/0.5/1.0/5.9 | 73 | 8.43 | -9.52 | 1.27 |
| 86.6/2.0/0.5/1.0/1.0/8.9 | 46 | 10.31 | -5.26 | 0.01 |
| 87.6/1.0/0.5/1.0/2.0/7.9 | 71 | 9.12 | -9.92 | 0.28 |

The results show that the compositions of the present invention have GWP of 150 or less, capacity within 10% of that for R-404A, and COP very similar to R-404A.

### EXAMPLE 12

Refrigerant performance in medium temperature refrigeration for 1234yf/32/propylene/propane/CO₂. The results are in Table 12.

**Table 12**

| **1234yf/ 32/propylene/propane/CO₂ (wt%)** | **GWP (AR5)** | **Avg. Glide, K** | **Relative Capacity R-404A, %** | **Relative COP R-404A, %** |
|---|---|---|---|---|
| 71/21/1/2/5 | 143 | 8.62 | 8.96 | 0.48 |
| 71.6/21.9/0.5/2.0/4.0 | 149 | 8.01 | 6.30 | 1.01 |
| 73/21/1/1/4 | 143 | 7.96 | 4.60 | 1.30 |
| 74/18/1/1/6 | 123 | 9.22 | 7.14 | 0.56 |
| 73.6/21.9/1.0/0.5/3.0 | 149 | 7.27 | 1.90 | 1.91 |
| 77/16/2/1/4 | 109 | 8.20 | -0.39 | 1.50 |
| 76.6/18.9/2.0/0.5/2.0 | 129 | 6.94 | -3.47 | 2.46 |
| 78/10/2/1/9 | 69 | 11.34 | 7.81 | -0.36 |
| 77.6/16.9/1.0/0.5/4.0 | 115 | 7.98 | -1.20 | 1.80 |
| 79/8/2/1/10 | 55 | 11.99 | 8.47 | -0.63 |
| 78.6/11.9/1.0/0.5/8.0 | 82 | 10.53 | 5.12 | 0.27 |
| 80/11/1/2/6 | 75 | 9.39 | -0.65 | 0.77 |
| 79.6/10.9/2.0/0.5/7.0 | 75 | 9.92 | 1.74 | 0.59 |
| 79.6/14.9/1.0/0.5/4.0 | 102 | 7.95 | -3.78 | 1.94 |
| 81/4/1/2/12 | 28 | 13.34 | 9.83 | -1.26 |
| 80.6/8.9/0.5/1.0/9.0 | 62 | 11.20 | 4.49 | -0.04 |
| 82/9/1/1/7 | 62 | 9.80 | -1.40 | 0.69 |
| 81.6/14.9/1.0/0.5/2.0 | 102 | 6.61 | -9.98 | 3.00 |
| 83/7/1/1/8 | 48 | 10.37 | -0.88 | 0.34 |
| 82.6/12.9/1.0/0.5/3.0 | 88 | 7.12 | -9.61 | 2.59 |
| 83.6/3.0/0.5/1.0/11.9 | 21 | 13.10 | 6.40 | -0.87 |
| 84/5/1/1/9 | 35 | 10.93 | -0.36 | 0.00 |
| 83.6/8.9/1.0/0.5/6.0 | 62 | 8.90 | -5.56 | 1.28 |
| 85/2/1/1/11 | 15 | 12.20 | 2.17 | -0.64 |
| 84.6/6.0/2.0/0.5/6.9 | 41 | 9.41 | -5.33 | 0.77 |
| 85.6/2.0/1.0/0.5/10.9 | 14 | 12.07 | 1.32 | -0.49 |
| 86/6/1/1/6 | 42 | 8.55 | -9.15 | 1.20 |
| 87.6/1.0/2.0/0.5/8.9 | 8 | 10.13 | -6.12 | 0.02 |
| 88/1/2/1/8 | 8 | 9.30 | -8.85 | 0.26 |
| 88.6/2.0/1.0/0.5/7.9 | 14 | 9.28 | -9.28 | 0.51 |

The results show that the compositions of the present invention have GWP of 150 or less, capacity within 10% of that for R-404A, and COP very similar to R-404A.

## Claims

1. A composition comprising from about 0.05 to 22.0 weight percent HFC-32, about 68.0 to 99.9 weight percent HFO-1234yf, and about 0.05 to 10 weight percent propylene.

2. The composition of claim 1, further comprising propane.

3. The composition of claim 1, further comprising HFC-125.

4. The composition of claim 1, further comprising propane and HFC-125.

5. The composition of any of claims 1, 2, 3, or 4, further comprising CO₂.

6. The composition of any of claims 1 to 5, further comprising at least one lubricant.

7. The composition of claim 6 wherein said lubricant is selected from the group consisting of polyalkylene glycol, polyol ester, polyvinyl ether, and combinations thereof.

8. The composition of any of claims 1 to 7, further comprising at least one stabilizer.

9. The composition of claim 8, wherein said stabilizer is selected from the group consisting of nitromethane, ascorbic acid, terephthalic acid, azoles, phenolic compounds, cyclic monoterpenes, terpenes, phosphites, phosphates, phosphonates, thiols, lactones, and combinations thereof, preferably wherein said stabilizer is selected from the group consisting of tolutriazole, benzotriazole, tocopherol, hydroquinone, t-butyl hydroquinone, 2,6-di-terbutyl-4-methylphenol, fluorinated epoxides, n-butyl glycidyl ether, hexanediol diglycidyl ether, allyl glycidyl ether, butylphenylglycidyl ether, d-limonene, α-terpinene, β-terpinene, γ-terpinene, α-pinene, β-pinene, butylated hydroxytoluene, and combinations thereof.

10. The composition of any of claims 1 to 9 further comprising at least one tracer.

11. The composition of claim 10, wherein said tracer is selected from hydrofluorocarbons, hydrofluoroolefins, hydrochlorocarbons, hydrochloroolefins, hydrochlorofluorocarbons, hydrochlorofluoroolefins, hydrochlorocarbons, hydrochloroolefins, chlorofluorocarbons, chlorofluoroolefins, hydrocarbons, perfluorocarbons, perfluoroolefins, and combinations thereof, preferably wherein said tracer is selected from the group consisting of HFC-23, HCFC-31, HFC-41, HFC-161, HFC-152a, HFC-143a, HFC-227ca, HFC-227ea, HFC-236fa, HFC-236cb, HFC-236ea, HFC-245cb, HFC-245fa, HFC-245eb, HFC-254eb, HFC-263fb, HFC-272ca, HFC-281ea, HFC-281fa, HFC-329p, HFC-329mmz, HFC-338mf, HFC-338pcc, CFC-12, CFC-11, CFC-114, CFC-114a, CFC-115, HCFC-22, HCFC-123, HCFC-124, HCFC-124a, HCFC-141b, HCFC-142b, HCFC-151a, HCFC-244bb, HCC-40, HFO-1141, HCFO-1130E, HCFO-1130Z, HCFO-1130a, HCFO-1131, HCFO-1131a, HCFO-1122, HFO-1123, HFO-1234ye, HFO-1243zf, HFO-1225yeZ, HFO-1225yeE, HFO-1225zc, PFC-116, PFC-C216, PFC-218, PFC-C318, PFC-1216, PFC-31-10mc, PFC-31-10my, CFO-1113, HFC-365mfc, HFC-43-10mee, 1,1,1,2,2,3,4,5,5,6,6,7,7,7-tetradecafluoroheptane, hexafluorobutadiene, 3,3,3-trifluoropropyne, and combinations thereof.

12. A process for producing cooling comprising evaporating the composition of any of claims 1 to 5 in the vicinity of a body to be cooled and thereafter condensing said composition.

13. A process for producing heating comprising condensing the composition of any of claims 1 to 5 in the vicinity of a body to be heated and thereafter evaporating said composition.

14. A system for cooling or heating comprising an evaporator, compressor, condenser, and expansion device, said system containing the composition of any of claims 1 to 5.

15. A method for replacing a first refrigerant composition with a second refrigerant composition in a cooling or heating system comprising removing the first refrigerant composition from the cooling or heating system and charging second refrigerant composition to the cooling or heating system, wherein the first refrigerant is selected from any of R-22, R-134a, R-1234yf, R-407C, R-407F, R-404A, or R-507, and wherein the second refrigerant composition is the composition of any of claims 1 to 5.

## Patentansprüche

1. Zusammensetzung, umfassend von etwa 0,05 bis 22,0 Gewichtsprozent HFC-32, etwa 68,0 bis 99,9 Gewichtsprozent HFO-1234yf und etwa 0,05 bis 10 Gewichtsprozent Propylen.

2. Zusammensetzung nach Anspruch 1, weiter umfassend Propan.

3. Zusammensetzung nach Anspruch 1, weiter umfassend HFC-125.

4. Zusammensetzung nach Anspruch 1, weiter umfassend Propan und HFC-125.

5. Zusammensetzung nach einem der Ansprüche 1, 2, 3 oder 4, weiter umfassend CO₂.

6. Zusammensetzung nach einem der Ansprüche 1 bis 5, weiter umfassend mindestens ein Schmiermittel.

7. Zusammensetzung nach Anspruch 6, wobei das Schmiermittel ausgewählt ist aus der Gruppe bestehend aus Polyalkylenglykol, Polyolester, Polyvinylether und Kombinationen davon.

8. Zusammensetzung nach einem der Ansprüche 1 bis 7, weiter umfassend mindestens einen Stabilisator.

9. Zusammensetzung nach Anspruch 8, wobei der Stabilisator ausgewählt ist aus der Gruppe bestehend aus Nitromethan, Ascorbinsäure, Terephthalsäure, Azolen, Phenolverbindungen, cyclischen Monoterpenen, Terpenen, Phosphiten, Phosphaten, Phosphonaten, Thiolen, Lactonen und Kombinationen davon, wobei der Stabilisator vorzugsweise ausgewählt ist aus der Gruppe bestehend aus Tolutriazol, Benzotriazol, Tocopherol, Hydrochinon, tert-Butylhydrochinon, 2,6-Di-tert-butyl-4-methylphenol, fluorierten Epoxiden, n-Butylglycidylether, Hexandioldiglycidylether, Allylglycidylether, Butylphenylglycidylether, d-Limonen, α-Terpinen, β-Terpinen, γ-Terpinen, α-Pinen, β-Pinen, butyliertem Hydroxytoluol und Kombinationen davon.

10. Zusammensetzung nach einem der Ansprüche 1 bis 9, weiter umfassend mindestens einen Tracer.

11. Zusammensetzung nach Anspruch 10, wobei der Tracer ausgewählt ist aus Fluorkohlenwasserstoffen, Hydrofluorolefinen, Chlorkohlenwasserstoffen, Hydrochlorolefinen, Chlorfluorkohlenwasserstoffen, Hydrochlorfluorolefinen, Chlorkohlenwasserstoffen, Hydrochlorolefinen, Chlorfluorkohlenstoffen, Chlorfluorolefinen, Kohlenwasserstoffen, Perfluorkohlenstoffen, Perfluorolefinen und Kombinationen davon, wobei der Tracer vorzugsweise ausgewählt ist aus der Gruppe bestehend aus HFC-23, HCFC-31, HFC-41, HFC-161, HFC-152a, HFC-143a, HFC-227ca, HFC-227ea, HFC- 236fa, HFC-236cb, HFC-236ea, HFC-245cb, HFC-245fa, HFC-245eb, HFC- 254eb, HFC-263fb, HFC-272ca, HFC-281ea, HFC-281fa, HFC-329p, HFC- 329mmz, HFC-338mf, HFC-338pcc, CFC-12, CFC-11, CFC-114, CFC-114a, CFC-115, HCFC-22, HCFC-123, HCFC-124, HCFC-124a, HCFC-141b, HCFC- 142b, HCFC-151a, HCFC-244bb, HCC-40, HFO-1141, HCFO-1130E, HCFO-1130Z, HCFO-1130a, HCFO-1131, HCFO-1131a, HCFO-1122, HFO-1123, HFO-1234ye, HFO-1243zf, HFO-1225yeZ, HFO-1225yeE, HFO-1225zc, PFC- 116, PFC-C216, PFC-218, PFC-C318, PFC-1216, PFC-31-10mc, PFC-31-10my, CFO-1113, HFC-365mfc, HFC-43-10mee, 1,1,1,2,2,3,4,5,5,6,6,7,7,7-Tetradecafluorheptan, Hexafluorbutadien, 3,3,3-Trifluorpropin und Kombinationen davon.

12. Verfahren zum Erzeugen von Kühlung, umfassend das Verdampfen der Zusammensetzung nach einem der Ansprüche 1 bis 5 in der Nähe eines zu kühlenden Körpers und danach Kondensieren der Zusammensetzung.

13. Verfahren zum Erzeugen von Erwärmung, umfassend das Kondensieren der Zusammensetzung nach einem der Ansprüche 1 bis 5 in der Nähe eines zu erwärmenden Körpers und danach Verdampfen der Zusammensetzung.

14. System zum Kühlen oder Erwärmen, umfassend einen Verdampfer, Kompressor, Kondensator und eine Expansionsvorrichtung, wobei das System die Zusammensetzung nach einem der Ansprüche 1 bis 5 enthält.

15. Verfahren zum Ersetzen einer ersten Kältemittelzusammensetzung mit einer zweiten Kältemittelzusammensetzung in einem Kühlungs- oder Erwärmungssystem, umfassend das Entfernen der ersten Kältemittelzusammensetzung aus dem Kühlungs- oder Erwärmungssystem und das Beschicken des Kühlungs- oder Erwärmungssystem mit einer zweiten Kältemittelzusammensetzung, wobei das erste Kältemittel ausgewählt ist aus einem beliebigem von R-22, R-134a, R-1234yf, R-407C, R-407F, R-404A oder R-507, und wobei die zweite Kältemittelzusammensetzung die Zusammensetzung nach einem der Ansprüche 1 bis 5 ist.

## Revendications

1. Composition comprenant environ 0,05 à 22,0 pour cent en poids de HFC-32, environ 68,0 à 99,9 pour cent en poids de HFO-1234yf, et environ 0,05 à 10 pour cent en poids de propylène.

2. Composition selon la revendication 1, comprenant en outre du propane.

3. Composition selon la revendication 1, comprenant en outre du HFC-125.

4. Composition selon la revendication 1, comprenant en outre du propane et du HFC-125.

5. Composition selon l'une quelconque des revendications 1, 2, 3 ou 4, comprenant en outre du CO₂.

6. Composition selon l'une quelconque des revendications 1 à 5, comprenant en outre au moins un lubrifiant.

7. Composition selon la revendication 6, dans laquelle ledit lubrifiant est sélectionné dans le groupe consistant en polyalkylène glycol, ester de polyol, éther polyvinylique, et des combinaisons de ceux-ci.

8. Composition selon l'une quelconque des revendications 1 à 7, comprenant en outre au moins un stabilisateur.

9. Composition selon la revendication 8, dans laquelle ledit stabilisateur est sélectionné dans le groupe consistant en nitrométhane, acide ascorbique, acide téréphtalique, azoles, composés phénoliques, monoterpènes cycliques, terpènes, phosphites, phosphates, phosphonates, thiols, lactones et des combinaisons de ceux-ci, de préférence dans laquelle ledit stabilisateur est sélectionné dans le groupe consistant en tolutriazole, benzotriazole, tocophérol, hydroquinone, t-butyl hydroquinone, 2,6-di-terbutyl-4-méthylphénol, époxydes fluorés, n-butylglycidyl éther, éther diglycidylique d'hexanediol, éther d'allyle et de glycidyle, éther glycidylique de butylphényle, d-limonène, α-terpinène, β-terpinène, γ-terpinène, α-pinène, β-pinène, hydroxytoluène butylé, et des combinaisons de ceux-ci.

10. Composition selon l'une quelconque des revendications 1 à 9 comprenant en outre au moins un traceur.

11. Composition selon la revendication 10, dans laquelle ledit traceur est sélectionné parmi les hydrofluorocarbures, les hydrofluorooléfines, les hydrochlorocarbures, les hydrochlorooléfines, les hydrochlorofluorocarbures, les hydrochlorofluorooléfines, les hydrochlorocarbures, les hydrochlorooléfines, les chlorofluorocarbures, les chlorofluorooléfines, les hydrocarbures, les perfluorocarbures, les perfluorooléfines, et des combinaisons de ceux-ci, de préférence dans laquelle ledit traceur est sélectionné dans le groupe consistant en HFC-23, HCFC-31, HFC-41, HFC-161, HFC-152a, HFC-143a, HFC-227ca, HFC-227ea, HFC-236fa, HFC-236cb, HFC-236ea, HFC-245cb, HFC-245fa, HFC-245eb, HFC-254eb, HFC-263fb, HFC-272ca, HFC-281ea, HFC-281fa, HFC-329p, HFC-329mmz, HFC-338mf, HFC-338pcc, CFC-12, CFC-11, CFC-114, CFC-114a, CFC-115, HCFC-22, HCFC-123, HCFC-124, HCFC-124a, HCFC-141b, HCFC-142b, HCFC-151a, HCFC-244bb, HCC-40, HFO-1141, HCFO-1130E, HCFO-1130Z, HCFO-1130a, HCFO-1131, HCFO-1131a, HCFO-1122, HFO-1123, HFO-1234ye, HFO-1243zf, HFO-1225yeZ, HFO-1225yeE, HFO-1225zc, PFC-116, PFC-C216, PFC-218, PFC-C318, PFC-1216, PFC-31-10mc, PFC-31-10my, CFO-1113, HFC-365mfc, HFC-43-10mee, 1,1,1,2,2,3,4,5,5,6,6,7,7,7-tétradécafluoroheptane, hexafluorobutadiène, 3,3,3-trifluoropropyne, et des combinaisons de ceux-ci.

12. Processus de production de refroidissement comprenant l'évaporation de la composition selon l'une quelconque des revendications 1 à 5 à proximité d'un corps devant être refroidi, et par la suite la condensation de ladite composition.

13. Processus de production de chauffage comprenant la condensation de la composition selon l'une quelconque des revendications 1 à 5 à proximité d'un corps devant être chauffé, et par la suite l'évaporation de ladite composition.

14. Système de refroidissement ou de chauffage comprenant un évaporateur, un compresseur, un condenseur et un dispositif d'expansion, ledit système contenant la composition selon l'une quelconque des revendications 1 à 5.

15. Procédé de remplacement d'une première composition de réfrigérant par une seconde composition de réfrigérant dans un système de refroidissement ou de chauffage, comprenant le retrait de la première composition de réfrigérant du système de refroidissement ou de chauffage et le chargement d'une seconde composition de réfrigérant dans le système de refroidissement ou de chauffage, dans lequel le premier réfrigérant est sélectionné parmi l'un quelconque du R-22, R-134a, R-1234yf, R-407C, R-407F, R-404A ou R-507, et dans lequel la seconde composition de réfrigérant est la composition selon l'une quelconque des revendications 1 à 5.
